# EUROPÄISCHE PATENTSCHRIFT

(11) **EP 3 527 789 B1**
(45) Veröffentlichungstag und Bekanntmachung des Hinweises auf die Patenterteilung: **09.09.2020**
(21) Anmeldenummer: 19156948.2
(22) Anmeldetag: 13.02.2019
(51) Int. Cl.: F01D 25/18, F16C 33/66, F16C 35/04

(54) **LAGERKAMMERGEHÄUSE FÜR EINE STRÖMUNGSMASCHINE UND ZUGEHÖRIGES FERTIGUNGSVERFAHREN**
BEARING CHAMBER HOUSING FOR A TURBOMACHINE AND CORRESPONDING MANUFACTURE METHOD
BOÎTIER DE CARTER DE PALIER POUR UNE TURBOMACHINE ET MÉTHODE D'ASSEMBLAGE ASSOCIÉE

(30) Priorität: 19.02.2018 DE 102018202494
(43) Veröffentlichungstag der Anmeldung: 21.08.2019
(73) Patentinhaber: MTU Aero Engines AG, 80995 München (DE)
(72) Erfinder: Stiehler, Frank, 04924 Bad Liebenwerda (DE); Kempinger, Georg, 85386 Eching (DE); Kraus, Jürgen, 85221 Dachau (DE); Schlothauer, Steffen, 85253 Erdweg (DE); Liebl, Christian, 85461 Bockhorn (DE); Eichinger, Alois, 85276 Pfaffenhofen (DE); Köbke, Thomas, 82223 Eichenau (DE)

(56) Entgegenhaltungen:
- EP-A1- 2 657 553
- EP-A1- 3 244 026
- WO-A1-2014/093286
- WO-A1-2016/021489

## Beschreibung

### Technisches Gebiet

Die vorliegende Erfindung betrifft ein Lagerkammergehäuse zum Lagern einer Welle einer Strömungsmaschine.

### Stand der Technik

Bei der Strömungsmaschine kann es sich bspw. um ein Strahltriebwerk handeln, z. B. um ein Mantelstromtriebwerk. Funktional gliedert sich die Strömungsmaschine in Verdichter, Brennkammer und Turbine. Etwa im Falle des Strahltriebwerks wird angesaugte Luft vom Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert. Die Turbine ist in der Regel aus mehreren Stufen mit jeweils einem Stator (Leitschaufelkranz) und einem Rotor (Laufschaufelkranz) aufgebaut, die Rotoren werden von dem Heißgas angetrieben. In jeder Stufe wird dem Heißgas dabei anteilig innere Energie entzogen, die in eine Bewegung des jeweiligen Laufschaufelkranzes und damit der Welle umgesetzt wird.

Der vorliegende Gegenstand betrifft ein Lagerkammergehäuse zum Lagern der Welle, wobei die Bezugnahme auf ein Strahltriebwerk den Erfindungsgedanken zunächst nicht in seiner Allgemeinheit beschränken soll. Bei der Strömungsmaschine kann es sich bspw. auch um eine stationäre Gasturbine handeln.

WO 2014/093286 offenbart ein Lagerkammergehäuse mit den Merkmalen des Oberbegriffes des Anspruchs 1.

### Darstellung der Erfindung

Der vorliegenden Erfindung liegt das technische Problem zugrunde, ein besonders vorteilhaftes Lagerkammergehäuse für eine Strömungsmaschine, sowie ein vorteilhaftes Verfahren zu dessen Herstellung anzugeben.

Dies wird erfindungsgemäß mit einem Lagerkammergehäuse gemäß Anspruch 1 gelöst, sowie mit einem Verfahren zu dessen Herstellung gemäß Anspruch 13. Eine Gehäusewand des Lagerkammergehäuses ist bzw. wird generativ aufgebaut, also anhand eines Datenmodells durch bereichsweise selektives Verfestigen eines zuvor formlosen bzw. formneutralen Stoffes erzeugt (siehe unten im Detail). Erfindungsgemäß wird die Gehäusewand mit einem Ölkanal als integralem Bestandteil aufgebaut. Dieser Ölkanal hat eine Einlassöffnung zum Einlassen von Öl aus einem Ölraum, den die Gehäusewand nach außen hin begrenzt, und eine Auslassöffnung (an der bspw. eine Pumpe zum Ansaugen des Öls angeschlossen werden kann). Die Einlass- und die Auslassöffnung unterscheiden sich sowohl in ihrer Axialposition als auch in ihrer Umlaufposition, sie liegen also zueinander axial versetzt und auch verdreht. Erfindungsgemäß ist der Ölkanal nun derart an bzw. in die Gehäusewand gelegt, dass er sich zumindest über einen Abschnitt hinweg mit einer Axial- und zugleich einer Umlaufkomponente erstreckt.

Da die Gehäusewand generativ aufgebaut ist, kann der Ölkanal mit dieser bildlich gesprochen schrauben- bzw. spiralförmigen Erstreckung vorgesehen werden, die generative Herstellung macht komplexere Geometrien zugänglich. Zum Vergleich, würde bei einer gusstechnischen Herstellung der Gehäusewand ein Ölkanal eingeformt werden, müsste dieser zum Ausgleich von Axial- und Umlaufversatz in gesonderte Abschnitte unterteilt werden, wovon sich der eine ausschließlich umlaufend und daran anschließend der andere ausschließlich axial erstreckt, andernfalls wäre kein Entformen möglich. Abgesehen davon, dass dies bereits ein aufwendiges Formwerkzeug erfordern würde, verkürzt die vorliegend aufgrund der generativen Herstellung mögliche Schrauben- bzw. Spiralform auch die Erstreckung des Kanals zwischen Einlass- und Auslassöffnung. Der kürzere Kanal kann bspw. Strömungsverluste verringern helfen, zumal auch bereits die Schrauben- bzw. Spiralform an sich strömungstechnisch besser als ein in mehrere Abschnitte jeweils eigener Erstreckung untergliederter Kanal sein kann. Aufgrund einer verbesserten Ansaugung über den Ölkanal kann dann bspw. eine zugeordnete Pumpe kleiner dimensioniert werden, was z. B. Gewichts-, Platz- und Kostenvorteile haben kann.

Bevorzugte Ausführungsformen finden sich in den abhängigen Ansprüchen und der gesamten Offenbarung, wobei in der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen. Wird bspw. auf ein in bestimmter Weise hergestelltes Lagerkammergehäuse Bezug genommen, ist dies immer auch als Offenbarung eines entsprechenden Herstellungsverfahrens zu lesen, und umgekehrt.

Die Angaben "axial" und "radial", sowie die zugehörigen Richtungen, beziehen sich im Rahmen dieser Offenbarung auf die Drehachse der Welle, die bei Betrachtung der Strömungsmaschine im Gesamten mit deren Längsachse zusammenfällt. Um die Drehachse "umlaufend" drehen im Betrieb die Rotoren, nämlich in "Umlaufrichtung". "Ein" und "eine" sind als unbestimmte Artikel und damit ohne ausdrücklich gegenteilige Angabe immer auch als "mindestens ein" bzw. "mindestens eine" zu lesen.

Soweit generell die "Erstreckung" des Ölkanals beschrieben wird, bezieht sich dies auf den Verlauf von dessen Mittenlinie. Die Mittenlinie erstreckt sich mittig im Ölkanal entlang dessen Länge, liegt also in zur Durchströmung senkrechten Schnittebenen betrachtet jeweils im Flächenschwerpunkt des Innenquerschnitts, also des Strömungsquerschnitts. Diese Mittenlinie hat zumindest über einen Abschnitt des Ölkanals hinweg in jedem Punkt eine Axial- und eine Umlaufkomponente, eine in einem jeweiligen Punkt an die Mittenlinie gelegte Tangente erstreckt sich also anteilig axial und auch umlaufend (sowie gegebenenfalls radial, siehe unten).

Eine entsprechende Erstreckung soll der Ölkanal "zumindest abschnittsweise" haben, bspw. über mindestens 50 %, 70 % bzw. 90 % seiner entlang der Mittenlinie zwischen der Einlass- und der Auslassöffnung genommenen Länge (die Prozentangaben sind in der Reihenfolge der Nennung zunehmend bevorzugt). Soweit möglich hat der Ölkanal bevorzugt über seine gesamte Erstreckung (100 %) einen entsprechenden Verlauf. Bezogen auf das montierte Lagerkammer- bzw. Turbinenzwischengehäuse, also bei Betrachtung der Strömungsmaschine im Gesamten in Montageposition, liegt die Einlassöffnung bevorzugt unten in dem Ölraum (bezogen auf die vertikale Richtung). Bezogen auf die Gas- bzw. Heißgasströmung im Heißgaskanal der Strömungsmaschine ist die Auslassöffnung des Ölkanals bevorzugt stromab der Einlassöffnung angeordnet, liegt sie dann also hinter und ein Stück weit oberhalb der Einlassöffnung. Damit steht in dem Lagerkammergehäuse auf der Axialposition der Auslassöffnung unten vorteilhafterweise Raum zur Verfügung, dort kann bspw. eine andere Anschlussöffnung angeordnet werden. Der Umlaufversatz zwischen der Einlass- und der Auslassöffnung des Ölkanals kann also hinsichtlich der anschlusstechnischen Zugänglichkeit des von der Gehäusewand begrenzten Ölraums von Vorteil sein.

Auch aufgrund der vergleichsweise geringen Wanddicken, welche mit der generativen Herstellung möglich sind, wird der Ölkanal in der Regel nicht (vollständig) innerhalb der Gehäusewand angeordnet sein, sondern an einer Wandfläche der Gehäusewand hervortreten. Im Allgemeinen ist zwar auch ein nach radial außen, vom Ölraum weg gewölbter Ölkanal denkbar, bevorzugt ist er jedoch zum Ölraum hin ausgewölbt, auch weil dann radial außerhalb mehr Raum zur Verfügung steht.

Erfindungsgemäß hat die Erstreckung des Ölkanals zusätzlich zu der Axial- und der Umlaufkomponente auch eine Radialkomponente. Der Ölkanal erstreckt sich also umlaufend und axial (schraubenförmig) und dabei zugleich radial, weitet bzw. verengt sich also spiralförmig.

In bevorzugter Ausgestaltung liegt die Einlassöffnung, durch welche das Öl in den Ölkanal eingelassen bzw. eingesaugt wird, radial weiter innen als die Auslassöffnung des Ölkanals. Die Öffnungen unterscheiden sich also in ihren Radialpositionen, wobei die Einlassöffnung der Drehachse näher liegt.

Da die vorliegende Erfindung einen Ölkanal mit zusätzlich radialer Erstreckung betrifft, ist dessen Innenquerschnitt in Abhängigkeit von der Radialposition angepasst. Erfindungsgemäß nimmt eine in Umlaufrichtung genommene Weite des Innenquerschnitts von radial innen nach radial außen zu, wird der Ölkanal bzw. dessen im Betrieb von dem Öl durchströmtes Innenvolumen von radial innen nach radial außen breiter. Umgekehrt nimmt eine in Radialrichtung genommene Höhe des Innenquerschnitts von radial innen nach radial außen ab, bevorzugt genau gegenläufig zur Weitenänderung. Die Querschnittsgeometrie ist somit vorteilhafterweise an den Kanalverlauf angepasst.

Generell ist der Ölkanal in bevorzugter Ausgestaltung mit einem Innenquerschnitt vorgesehen, dessen Form sich über die Erstreckung hinweg ändert, dessen Flächeninhalt dabei jedoch unverändert bleibt. Der Innenquerschnitt kann bspw. bei Zwangsbedingungen, wie dem Vorhandensein anderer Strukturen, angepasst werden. Solche Strukturen können bspw. Rippen bzw. Streben oder auch Schalen zur Lageraufnahme etc. sein, die an der Gehäusewand angeordnet den optimalen Kanalverlauf kreuzen und damit stören würden. Der Kanal kann dann durch eine lokale Anpassung seiner Querschnittsform "ausweichen", wobei aber die Querschnittsfläche, also der Flächeninhalt, konstant gehalten wird. Diese Bedingung geht bevorzugt auch bei der im vorherigen Absatz diskutierten Ausführungsform ein, der je nach Radialposition mit unterschiedlicher Weite und angepasster Höhe vorgesehene Kanal hat also bevorzugt über sämtliche Radialpositionen hinweg eine konstanten Flächeninhalt. Generell ist der konstante Flächeninhalt hinsichtlich der Durchströmung des Ölkanals von Vorteil, und es wird auf die eingangs genannten Vorteile verwiesen.

Bei einer bevorzugten Ausführungsform laufen die Seitenwände des Ölkanals, die miteinander dessen Innenquerschnitt in Umlaufrichtung begrenzen, im Bereich der Auslassöffnung aufeinander zu. Dies kann hinsichtlich der generativen Herstellung von Vorteil sein, wenn nämlich aus der entgegengesetzten Richtung aufgebaut wird. Entlang der Aufbaurichtung laufen die Seitenwände also entsprechend auseinander, gibt es also zwar einen Überhang, der jedoch im Falle dieser V-förmigen Anordnung weniger ausgeprägt bzw. kritisch ist als bspw. bei einer U-förmigen Anordnung.

In bevorzugter Ausgestaltung schließen die V-förmig aufeinander zulaufenden Seitenwände miteinander einen Winkel von mindestens 40°, bevorzugt mindestens 50°, und (davon unabhängig) bspw. nicht mehr als 80°, bevorzugt nicht mehr als 70°, ein. Besonders bevorzugt kann ein Winkel von rund 60° sein. Diese V-Form der Seitenwände muss sich dabei nicht auch im Innenquerschnitt des Ölkanals abzeichnen, bevorzugt kann dort der Raum zwischen den Schenkeln der V-Form bei der generativen Herstellung mit Material aufgefüllt werden, was einen besseren Abfluss des Öls zu bzw. durch die Auslassöffnung erlauben kann. Letztere ist bevorzugt im Wesentlichen rund.

Bei einer bevorzugten Ausführungsform mündet die Auslassöffnung des Ölkanals außerhalb des Ölraums. Das Öl wird in dem Ölkanal also auch von radial innerhalb der Gehäusewand nach radial außerhalb gebracht, dort kann bspw. eine Absaugeinrichtung angeordnet sein, insbesondere eine Pumpe.

Bei einer bevorzugten Ausführungsform ist die Gehäusewand relativ zu der Drehachse der Welle, zu welcher die Gehäusewand in der Regel dreh- bzw. zumindest sektorweise auch rotationssymmetrisch ist, um nicht mehr als 60° verkippt, wobei höchstens 45° bzw. höchstens 20° weiter und besonders bevorzugt sind. Aufgrund der Dreh- bzw. Rotationssymmetrie der Gehäusewand liegt die Aufbaurichtung bevorzugt parallel zur Drehachse. Damit sind etwaige Überhänge, die bei der generativen Herstellung nachteilig sein können, zumindest begrenzt. Betrachtet wird jeweils der kleinere von zwei Winkeln, welche die Drehachse und die Gehäusewand miteinander einschließen (konkret wird an einer jeweilig betrachteten Stelle der Gehäusewand ein Schnittwinkel zwischen Gehäusewand und einer achsparallelen Linie ermittelt).

Die Umlaufpositionen von Einlass- und Auslassöffnung des Ölkanals sind in bevorzugter Ausgestaltung um mindestens 40° zueinander versetzt, wobei mindestens 60° bzw. 70° weiter und besonders bevorzugt sind. Bevorzugte Obergrenzen liegen (von den Untergrenzen unabhängig) bei in der Reihenfolge der Nennung zunehmend bevorzugt höchstens 140°, 120° bzw. 110°. Besonders bevorzugt ist ein Versatz von rund 90°, wird das Öl also dann im Betrieb bspw. von unten im Ölraum auf mittlere Höhe zur Seite geführt.

Die Erfindung betrifft auch ein Turbinenzwischengehäuse für eine Strömungsmaschine, insbesondere ein Strahltriebwerk, mit einem vorliegend offenbarten Lagerkammergehäuse. Das Turbinenzwischengehäuse kann im Allgemeinen auch zwischen der Brennkammer und der/den Turbinenmodul(en) angeordnet werden, bevorzugt ist es zum Anordnen zwischen zwei Turbinenmodulen ausgelegt, z. B. zwischen Hochdruck und Mittel- bzw. Niederdruckturbine. In dem Lagerkammergehäuse kann bzw. können dann ein oder mehrere Lager zum Führen der Welle angeordnet sein, etwa im Falle des Ausführungsbeispiels ein Kugel- und ein Wälzlager.

In bevorzugter Ausgestaltung begrenzt das Turbinenzwischengehäuse radial außerhalb des Lagerkammergehäuses einen Heißgaskanalabschnitt, der im Betrieb der Strömungsmaschine stromab der Brennkammer von dem Heißgas durchströmt wird. In dem Lagerkammergehäuse ist die Auslassöffnung des Ölkanals dann bevorzugt axial hinter dessen Einlassöffnung angeordnet, wird also axial vorne angesaugt (vorne und hinten beziehen sich auf die Durchströmung des Heißgaskanalabschnitts mit Heißgas).

Wie bereits erwähnt, betrifft die Erfindung auch ein Verfahren zum Herstellen eines vorliegend offenbarten Lagerkammergehäuses bzw. Turbinenzwischengehäuses, wobei die Gehäusewand mit dem Ölkanal generativ aufgebaut wird. Das generative Aufbauen erfolgt bevorzugt in einem Pulverbettverfahren, der Werkstoff, aus dem aufgebaut wird, wird also Pulverform sequenziell Schicht für Schicht aufgetragen. Dabei wird je Schicht selektiv ein anhand des Datenmodells (der Bauteilgeometrie) vorbestimmter Bereich verfestigt. Die Verfestigung erfolgt durch Aufschmelzen mittels einer Strahlquelle, wobei im Allgemeinen bspw. auch eine Elektronenstrahlquelle denkbar ist. Bevorzugt ist eine Laserquelle, wird also mit einem Laserstrahl aufgeschmolzen, das generative Aufbauen ist dann also ein selektives Laserschmelzen (SLM).

Bevorzugt wird der Ölkanal mit im Bereich der Auslassöffnung V-förmigen Seitenwänden aufgebaut (siehe vorne). Die Aufbaurichtung kann dann so gewählt werden, dass mit der Spitze der V-Form beginnend sukzessive die (in dieser Richtung) auseinanderlaufenden Seitenwände des Ölkanals aufgebaut werden. Generell werden Überhänge bevorzugt begrenzt. Ein etwaiger Überhang soll mit den Schichten einen Winkel von höchstens 60° einschließen, in der Reihenfolge der Nennung zunehmend bevorzugt höchstens 50°, 40° bzw. 30°. Generell ist selbstverständlich ein Vermeiden von Überhängen bevorzugt (also 0°), was aber nicht immer möglich ist. Betrachtet wird hierbei der Winkel, den eine im Bereich des Überhangs in die Bauteiloberfläche gelegte Flächennormale mit den Schichten einschließt, konkret mit einer Ebene, die eine Grenzfläche zwischen zwei zuvor verfestigten Schichten beinhaltet.

Die Erfindung betrifft auch die Verwendung eines vorliegend offenbarten Lagerkammergehäuses bzw. Turbinenzwischengehäuses für eine Strömungsmaschine, insbesondere für ein Strahltriebwerk. Das Lagerkammergehäuse nimmt dann die Welle der Strömungsmaschine auf, diese rotiert im Betrieb um die Drehachse, der Ölraum des Lagerkammergehäuses ist mit Öl gefüllt.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: ein Strahltriebwerk in einem Axialschnitt;
- Figur 2: ein Lagerkammergehäuse mit einem erfindungsgemäßen Ölkanal in einer axial geschnittenen Seitenansicht;
- Figur 3: das Lagerkammergehäuse gemäß Fig. 2, wiederum in einer axial geschnittenen Seitenansicht, aus einer anderen Radialrichtung gesehen.

### Bevorzugte Ausführung der Erfindung

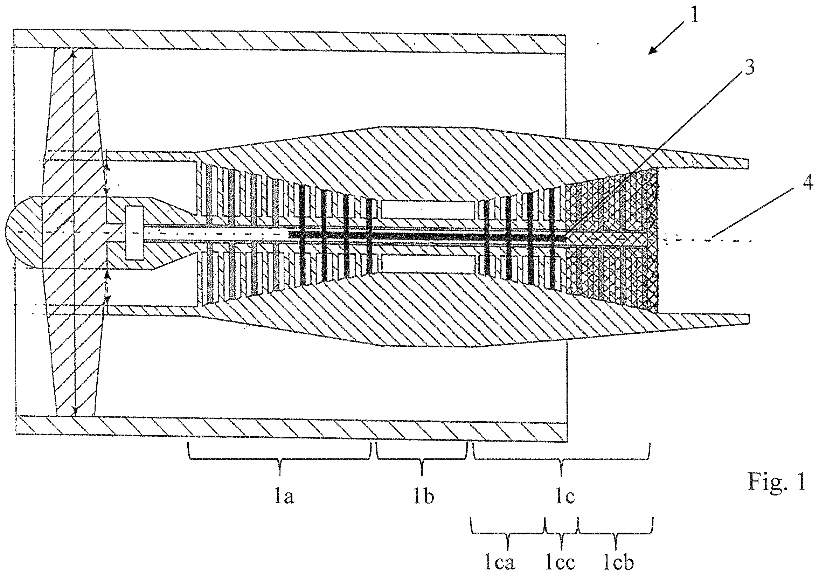

**Fig. 1** zeigt eine Strömungsmaschine 1 in schematischer Ansicht, konkret ein Strahltriebwerk. Die Strömungsmaschine 1 gliedert sich funktional in Verdichter 1a, Brennkammer 1b und Turbine 1c. Sowohl der Verdichter 1a als auch die Turbine 1c sind vorliegend jeweils aus zwei Modulen aufgebaut. Zwischen einem der Brennkammer 1b unmittelbar nachgelagerten Hochdruckturbinenmodul 1ca und einem Nieder- bzw. Mitteldruckturbinenmodul 1cb findet sich das Turbinenzwischengehäuse 1cc. Die Rotoren der Turbinenmodule 1ca, cb drehen jeweils auf einer Welle 3 um eine Drehachse 4. In dem Turbinenzwischengehäuse 1cc ist bzw. sind Lager für diese Welle 3 angeordnet.

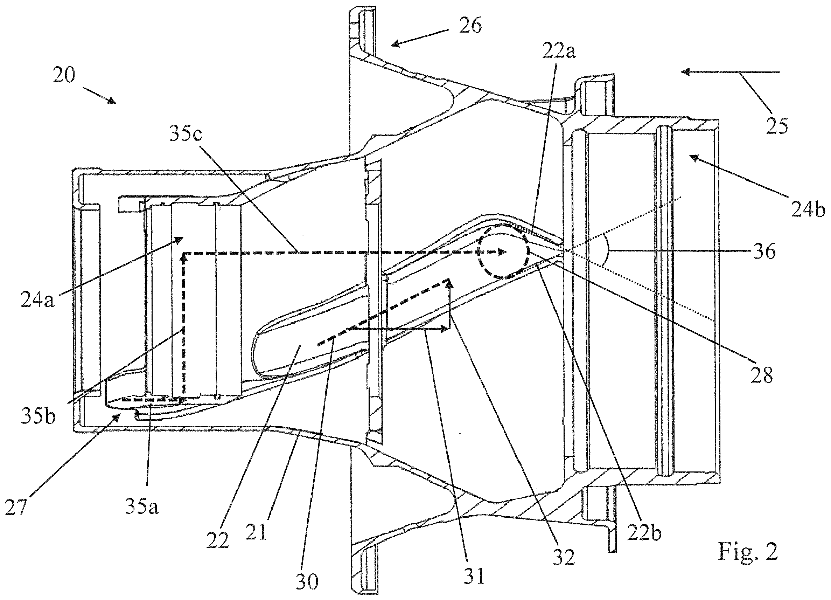

**Fig. 2** zeigt ein Lagerkammergehäuse 20, dessen Gehäusewand 21 erfindungsgemäß mit einem Ölkanal 22 aufgebaut ist. Die Gehäusewand 21 begrenzt einen Ölraum 23 nach radial außen, dieser ist im Betrieb der Strömungsmaschine 1 mit Öl zum Schmieren der Lager gefüllt. Das vorliegend dargestellte Lagerkammergehäuse 20 bildet zwei Aufnahmen 24a,b, wovon die axial vordere (in der Figur linke) ein Wälzlager aufnimmt und die axial hintere (in der Figur rechte) ein Kugellager aufnimmt.

Die Gehäusewand 21 wird generativ aufgebaut, wobei eine Aufbaurichtung 25 von axial hinten nach axial vorne weist, was sich vor allem in der Geometrie des außenseitigen Befestigungsflansches 26, der mit aufgebaut wird, begründet. Bei dem generativen Aufbauen der Gehäusewand 21 wird der Ölkanal 22 mit aufgebaut. Über den Ölkanal 22 kann durch eine Einlassöffnung 27 Öl aus dem Ölraum 23 angesaugt und zu einer Auslassöffnung 28 (strichliert, weist nach außen) und damit nach außerhalb der Gehäusewand 21 geführt werden.

Wie aus Fig. 2 ersichtlich, hat der Ölkanal 22 dabei eine Erstreckung in Axial- und zugleich Umlaufrichtung, hat also seine Mittenlinie 30 eine Axialkomponente 31 und eine Umlaufkomponente 32. Ferner hat die Erstreckung auch eine Radialkomponente, erstreckt sich von der Einlassöffnung 27 zur Auslassöffnung 28 nämlich nach radial außen. Mit dieser Geometrie kann ein möglichst kurzer Ölkanal 22 realisiert werden, der die Einlassöffnung 27 auf kürzestem Wege mit der Auslassöffnung 28 verbindet.

Zur Illustration ist zum Vergleich ein Pfad 35 eingezeichnet, auf dem das Öl im Falle eines gusstechnisch eingeformten Ölkanals geführt werden müsste. Dieser Pfad 35 ist in drei Abschnitte unterteilt, wovon sich ein erster und ein dritter 35a,c jeweils axial erstrecken, dazwischen verläuft der sich ausschließlich umlaufend erstreckende Abschnitt 35b. Eine solche Geometrie, die mit einer gusstechnischen Herstellung möglich wäre, würde zu einem deutlich längeren Ölkanal führen.

Wie bereits erwähnt, wird entlang der Aufbaurichtung 25 aufgebaut, wird der Ölkanal 22 also an der Auslassöffnung 28 beginnend zur Einlassöffnung 27 hin aufgebaut. Um dies zu vereinfachen, sind Seitenwände 22a,b des Ölkanals 22 im Bereich der Auslassöffnung 28 V-förmig zueinander angestellt, laufen sie also aufeinander zu. Miteinander schließen sie einen Winkel 36 von 60° ein.

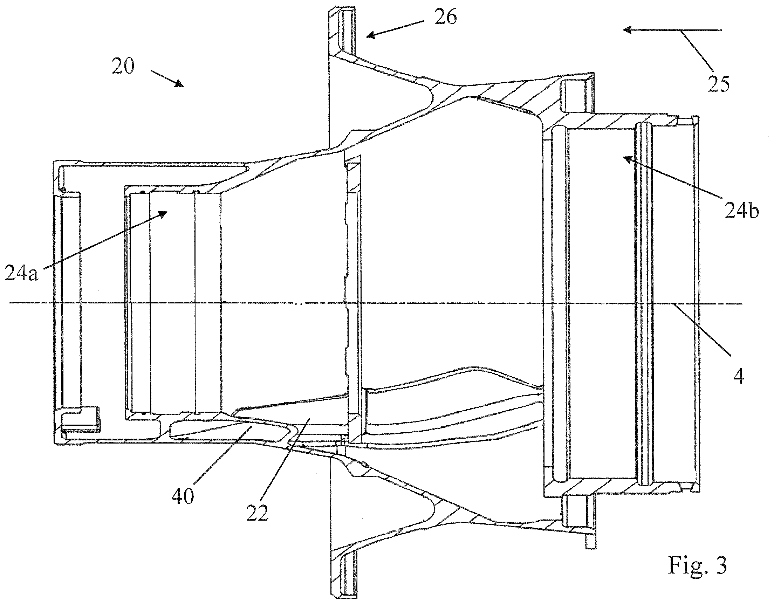

Auch **Fig. 3** zeigt das Lagerkammergehäuse 20 in einer axial geschnittenen Seitenansicht, wobei die Anordnung entgegen dem Uhrzeigersinn etwas verdreht ist. Dementsprechend ist der Ölkanal 22 angeschnitten, sodass der Blick auf dessen Innenquerschnitt 40 fällt. Aufgrund der Verdrehung liegt die Einlassöffnung nun vor der Zeichenebene, ist sie also in der Darstellung abgeschnitten.

Der Flächeninhalt des Innenquerschnitts 40 des Ölkanals 22 kann aufgrund der vergleichsweise freien Formgebung, die mit der generativen Herstellung möglich ist, über die Erstreckung des Ölkanals 22 konstant gehalten werden, auch wenn (wie in Fig. 3 zu erkennen) Zwangsstrukturen den Ölkanal kreuzen. Von radial innen nach radial außen nimmt die Höhe des Innenquerschnitts 40 ab, weil die in Umlaufrichtung genommene Weite zunimmt.

**BEZUGSZEICHENLISTE**

| | |
|---|---|
| Strömungsmaschine | 1 |
| Verdichter | 1a |
| Brennkammer | 1b |
| Turbine | 1c |
| Hochdruckturbinenmodul | 1ca |
| Nieder- bzw. Mitteldruckturbinenmodul | 1cb |
| Turbinenzwischengehäuse | 1cc |
| Welle | 3 |
| Drehachse | 4 |
| Lagerkammergehäuse | 20 |
| Gehäusewand | 21 |
| Ölkanal | 22 |
| Davon Seitenwände | 22a,b |
| Ölraum | 23 |
| Aufnahmen | 24a,b |
| Aufbaurichtung | 25 |
| Befestigungsflansch | 26 |
| Einlassöffnung | 27 |
| Auslassöffnung | 28 |
| Mittenlinie | 30 |
| Axialkomponente | 31 |
| Pfad | 35 |
| Davon Erster Abschnitt | 35a |
| Davon Dritter Abschnitt | 35b |
| Davon Dritter Abschnitt | 35c |
| Innenquerschnitt | 40 |

## Patentansprüche

1. Lagerkammergehäuse (20) zum Lagern einer Welle einer Strömungsmaschine (1), mit
einer generativ aufgebauten Gehäusewand (21), die bezogen auf eine Drehachse (4) der Welle (3) einen Ölraum (23) des Lagerkammergehäuses (20) nach radial außen begrenzt,
wobei die Gehäusewand (21) mit einem Ölkanal (22) aufgebaut ist, der zu dem Ölraum (23) hin eine Einlassöffnung (27) zum Einlassen von Öl aus dem (28) Ölraum (23) in den Ölkanal (22) aufweist, und der eine Auslassöffnung zum Auslassen des Öls aus dem Ölkanal (22) aufweist,
wobei die Auslassöffnung (28), jeweils bezogen auf die Drehachse (4) der Welle (3), auf einer anderen Axialposition und einer anderen Umlaufposition als die Einlassöffnung (27) liegt,
und wobei der Ölkanal (22) zumindest abschnittsweise eine Erstreckung mit einer Axialkomponente (31) und zugleich einer Umlaufkomponente hat, wobei die Erstreckung des Ölkanals (22) zumindest abschnittsweise zusätzlich zu der Axialkomponente (31) und der Umlaufkomponente auch eine Radialkomponente (32) hat,
**dadurch gekennzeichnet,**
**dass** von radial innen nach radial außen, eine in Umlaufrichtung genommene Weite eines Innenquerschnitts (40) des Ölkanals (22) zunimmt und eine in Radialrichtung genommene Höhe des Innenquerschnitts (40) abnimmt.

2. Lagerkammergehäuse (20) nach Anspruch 1, bei welchem die Einlassöffnung (27) des Ölkanals (22) radial weiter innen als die Auslassöffnung (28) des Ölkanals (22) liegt.

3. Lagerkammergehäuse (20) nach einem der vorstehenden Ansprüche, bei welchem der Ölkanal (22) einen Innenquerschnitt (40) hat, dessen Form sich über die Erstreckung hinweg ändert, dessen Flächeninhalt dabei jedoch gleich bleibt.

4. Lagerkammergehäuse (20) nach einem der vorstehenden Ansprüche, bei welchem Seitenwände (22a,b) des Ölkanals (22), die miteinander dessen Innenquerschnitt (40) in Umlaufrichtung begrenzen, im Bereich der Auslassöffnung (28) des Ölkanals (22) aufeinander zulaufen.

5. Lagerkammergehäuse (20) nach Anspruch 4, bei welchem die Seitenwände (22a,b) V-förmig aufeinander zulaufen und miteinander einen Winkel von mindestens 40° und höchstens 80° einschließen.

6. Lagerkammergehäuse (20) nach einem der vorstehenden Ansprüche, bei welchem die Auslassöffnung (28) des Ölkanals (22) außerhalb des von der Gehäusewand (21) begrenzten Ölraums (23) mündet, sodass durch den Ölkanal (22) Öl aus dem Ölraum (23) nach außerhalb des Ölraums (23) geführt werden kann.

7. Lagerkammergehäuse (20) nach einem der vorstehenden Ansprüche, bei welchem die Gehäusewand (21) relativ zu der Drehachse (4) um dem Betrag nach höchstens 60° verkippt ist.

8. Lagerkammergehäuse (20) nach einem der vorstehenden Ansprüche, bei welchem die Umlaufpositionen der Einlassöffnung (27) und der Auslassöffnung (28) in Umlaufrichtung um mindestens 40° und höchstens 140° zueinander versetzt sind.

9. Turbinenzwischengehäuse mit einem Lagerkammergehäuse (20) nach einem der vorstehenden Ansprüche.

10. Turbinenzwischengehäuse nach Anspruch 9, welches radial außerhalb des Lagerkammergehäuses (20) einen Heißgaskanalabschnitt begrenzt, wobei in dem Lagerkammergehäuse (20), bezogen auf eine Durchströmung des Heißgaskanalabschnitts, die Einlassöffnung (27) des Ölkanals (22) axial hinter der Auslassöffnung (28) liegt.

11. Verfahren zum Herstellen eines Lagerkammergehäuses (20) nach einem der Ansprüche 1 bis 8 oder eines Turbinenzwischengehäuses nach Anspruch 9 oder 10, bei welchem die Gehäusewand (21) mit dem Ölkanal (22) generativ aufgebaut wird.

12. Verfahren nach Anspruch 11, bei welchem die Gehäusewand (21) in einem Pulverbettverfahren aufgebaut wird.

13. Verwendung eines Lagerkammergehäuses (20) nach einem der Ansprüche 1 bis 9 oder eines Turbinenzwischengehäuses nach Anspruch 10 für eine Strömungsmaschine (1), insbesondere ein Strahltriebwerk.

## Claims

1. Bearing chamber housing (20) for supporting a shaft of a turbomachine (1), comprising an additively constructed housing wall (21) which, in relation to an axis of rotation (4) of the shaft (3), radially outwardly delimits an oil chamber (23) of the bearing chamber housing (20), the housing wall (21) being constructed so as to have an oil channel (22) which has an inlet opening (27) toward the oil chamber (23) for admitting oil from the oil chamber (23) into the oil channel (22), and which has an outlet opening (28) for discharging the oil from the oil channel (22), the outlet opening (28) being located, in each case in relation to the axis of rotation (4) of the shaft (3), in a different axial position and a different circumferential position than the inlet opening (27), and the oil channel (22) having, at least in portions, an extent having an axial component (31) and at the same time a circumferential component, the extent of the oil channel (22) also having, at least in portions, a radial component (32) in addition to the axial component (31) and the circumferential component, **characterized in that** from the radially inside to the radially outside, a width of an inner cross section (40) of the oil channel (22) taken in the circumferential direction increases and a height of the inner cross section (40) taken in the radial direction decreases.

2. Bearing chamber housing (20) according to claim 1, wherein the inlet opening (27) of the oil channel (22) is located radially further inward than the outlet opening (28) of the oil channel (22).

3. Bearing chamber housing (20) according to either of the preceding claims, wherein the oil channel (22) has an inner cross section (40) of which the shape changes over the extent but the surface area remains the same.

4. Bearing chamber housing (20) according to any of the preceding claims, wherein side walls (22a, b) of the oil channel (22), which together delimit its inner cross section (40) in the circumferential direction, converge in the region of the outlet opening (28) of the oil channel (22).

5. Bearing chamber housing (20) according to claim 4, wherein the side walls (22a, b) converge in a V-shape and enclose an angle of at least 40° and at most 80°.

6. Bearing chamber housing (20) according to any of the preceding claims, wherein the outlet opening (28) of the oil channel (22) opens outside the oil chamber (23) that is delimited by the housing wall (21), such that oil from the oil chamber (23) can be led outside the oil chamber (23) through the oil channel (22).

7. Bearing chamber housing (20) according to any of the preceding claims, wherein the housing wall (21) is tilted relative to the axis of rotation (4) by an amount of at most 60°.

8. Bearing chamber housing (20) according to any of the preceding claims, wherein the circumferential positions of the inlet opening (27) and the outlet opening (28) are offset from one another in the circumferential direction by at least 40° and at most 140°.

9. Turbine intermediate housing comprising a bearing chamber housing (20) according to any of the preceding claims.

10. Turbine intermediate housing according to claim 9, which delimits a hot gas channel portion radially outside of the bearing chamber housing (20), wherein in the bearing chamber housing (20) the inlet opening (27) of the oil channel (22) is located axially downstream of the outlet opening (28) in relation to a flow through the hot gas channel portion.

11. Method for producing a bearing chamber housing (20) according to any of claims 1 to 8 or a turbine intermediate housing according to either claim 9 or claim 10, wherein the housing wall (21) is additively constructed so as to have the oil channel (22).

12. Method according to claim 11, wherein the housing wall (21) is constructed in a powder bed method.

13. Use of a bearing chamber housing (20) according to any of claims 1 to 9 or a turbine intermediate housing according to claim 10 for a turbomachine (1), in particular a jet engine.

## Revendications

1. Carter de chambre de palier (20) destiné à loger un arbre d'une turbomachine (1), comportant
une paroi de carter (21) réalisée de façon additive, laquelle, par rapport à un axe de rotation (4) de l'arbre (3), délimite un compartiment d'huile (23) du carterde chambre de palier (20) radialement vers l'extérieur,
la paroi de carter (21) étant réalisée avec un canal d'huile (22), lequel canal d'huile présente, vers le compartiment d'huile (23), un orifice d'entrée (27) destiné à l'entrée d'huile provenant du compartiment d'huile (23) dans le canal d'huile (22) et présente un orifice de sortie (28) destiné à la sortie de l'huile du canal d'huile (22),
l'orifice de sortie (28) étant situé, respectivement par rapport à l'axe de rotation (4) de l'arbre (3), à une position axiale différente et à une position circonférentielle différente de celles de l'orifice d'entrée (27),
et le canal d'huile (22) possédant, au moins sur certaines sections, une extension comportant une composante axiale (31) et simultanément une composante circonférentielle,
l'extension du canal d'huile (22) possédant également, au moins sur certaines sections, une composante radiale en plus de la composante axiale (31) et de la composante circonférentielle (32),
**caractérisé en ce que**,
de l'intérieur radialement vers l'extérieur radialement, une largeur d'une section transversale intérieure (40) du canal d'huile (22) prise dans la direction circonférentielle augmente et **en ce qu'**une hauteurde la section transversale intérieure (40) prise dans la direction radiale diminue.

2. Carter de chambre de palier (20) selon la revendication 1, dans lequel l'orifice d'entrée (27) du canal d'huile (22) est situé plus à l'intérieurradialement que l'orifice de sortie (28) du canal d'huile (22).

3. Carter de chambre de palier (20) selon l'une des revendications précédentes, dans lequel le canal d'huile (22) possède une section transversale intérieure (40) dont la forme varie le long de l'extension, mais dont la superficie reste la même.

4. Carter de chambre de palier (20) selon l'une des revendications précédentes, dans lequel les parois latérales (22a, b) du canal d'huile (22), qui délimitent ensemble sa section transversale intérieure (40) dans la direction circonférentielle, convergent da ns la zone de l'orifice de sortie (28) du canal d'huile (22).

5. Carter de chambre de palier (20) selon la revendication 4, dans lequel les parois latérales (22a, b) convergent en forme de V et forment ensemble un angle d'au moins 40° et d'au plus 80°.

6. Carter de chambre de palier (20) selon l'une des revendications précédentes, dans lequel l'orifice de sortie (28) du canal d'huile (22) débouche à l'extérieur du compartiment d'huile (23) délimité par la paroi de carter (21), de sorte que l'huile provenant du compartiment d'huile (23) peut être conduite à l'extérieur du compartiment d'huile (23) à travers le canal d'huile (22).

7. Carter de chambre de palier (20) selon l'une des revendications précédentes, dans lequel la paroi de carter (21) est inclinée d'au plus 60° relativement à l'axe de rotation (4).

8. Carter de chambre de palier (20) selon l'une des revendications précédentes, dans lequel les positions circonférentielles de l'orifice d'entrée (27) et de l'orifice de sortie (28) sont décalées l'une par rapport à l'autre d'au moins 40° et d'au plus 140° dans la direction circonférentielle.

9. Carter intermédiaire de turbine comportant un carterde chambre de palier(20) selon l'une des revendications précédentes.

10. Carter intermédiaire de turbine selon la revendication 9, lequel délimite une section de canal de gaz chaud radialement à l'extérieur du carter de chambre de palier (20), l'orifice d'entrée (27) du canal d'huile (22), par rapport à un écoulement à travers la section de canal de gaz chaud, étant situé axialement derrière l'orifice de sortie (28) dans le carter de chambre de palier (20).

11. Procédé de fabrication d'un carterde chambre de palier (20) selon l'une des revendications 1 à 8 ou d'un carter intermédiaire de turbine selon la revendication 9 ou 10, dans lequel la paroi de carter (21) est réalisée avec le canal d'huile (22) de façon additive.

12. Procédé selon la revendication 11, dans lequel la paroi de carter(21) est réalisée dans un procédé à lit de poudre.

13. Utilisation d'un carter de chambre de palier (20) selon l'une des revendications 1 à 9 ou d'un carter intermédiaire de turbine selon la revendication 10 pour une turbomachine (1), en particulier un moteur à réaction.
